# EUROPEAN PATENT APPLICATION

(11) **EP 1 591 466 A1**
(43) Date of publication of application: **02.11.2005**
(21) Application number: 04009909.5
(22) Date of filing: 26.04.2004
(51) Int. Cl.: C08G 65/02, C08G 65/26, C08G 65/34, C08K 5/16, C08L 71/00, C10L 1/00, C10L 1/18, C10M 145/36, C10M 159/16, C10M 141/00, C11D 1/72

(54) **Preparation of a polyether composition**

(71) Applicant: BASF Aktiengesellschaft, 67056 Ludwigshafen (DE)
(72) Inventor: Völkel, Ludwig, 67117 Limburgerhof (DE); Walter, Marc, 67227 Frankenthal (DE); Bergemann, Marco, Chiyoda-ku, Tokyo 102-8570 (JP); Bohres, Edward, 68161 Mannheim (DE)
(74) Representative: Reitstötter - Kinzebach

(57) **Abstract**

The present invention relates to new polyether compounds which are useful as carrier oils in additive compositions for fuel and lubricants. The present invention also relates to compositions which comprise a polyether compound and detergent and/or dispersant additives for fuel or lubricants.

## Description

The present invention relates to new polyether compounds which are useful as carrier oils in additive compositions for fuel and lubricants. The present invention also relates to compositions which comprise a polyether compound and detergent and/or dispersant additives for fuel or lubricants.

Carburetors and intake systems of gasoline engines, but also injection systems for fuel metering, are being contaminated by impurities which are caused by dust particles from the air, uncombusted fuel residues from the combustion chamber and the crankcase vent gases passed into the carburetor.

In order to avoid these disadvantages, additives (detergents) are added to the fuel for keeping valves and carburetors or injection systems clean. Such detergents are generally used in combination with one or more so-called carrier oils. The carrier oils serve as a rule not only as a formulation base but perform an additional wash function, i.e. they often support and promote the detergents in their cleaning and keep-clean effect and can thus contribute toward a reduction in the required amount of detergents. Carrier oils used are usually viscous, high-boiling and in particular heat-stable liquids. They coat the hot metal surfaces, for example the intake valves, with a thin liquid film and thus prevent or delay the formation and deposition of decomposition products on the metal surfaces.

Frequently used carrier oils are, for example, high-boiling refined mineral oil fractions, but also synthetic liquids, such as oil-soluble polyethers of alkylene oxides or adducts of alkylene oxides with alcohols. Adducts of alkylene oxides with alcohols are the reaction products of alcohols with alkylene oxides. Here and in the following they are also referred to as polyoxyalkylene alkyl monoethers, alcohol polyalkoxylates or alkyl polyalkylene glycols. Carrier oils based on polyethers or adducts of alkylene oxides with short-chain alcohols as initiators can be obtained simply and economically but as a rule have insufficient compatibility with modern detergent additives, in particular detergent additives based on polyisobutenes, so that separation can occur upon storage, especially at low temperatures.

To enhance oil-solubility and thereby improving compatibility of the alkyl polyalkylene glycols with detergent additives and the storage stability of such additive compositions prior art suggests to either the oleophilic nature of the alcohol component of alkylpolyalkylene glycols or to incorporate relatively hydrophobic oxyalkylene units such as those derived from C₄ epoxides or branched C₁₁C₁₄ epoxides (see e.g. WO 98/44022 page 2). Unfortunately, these modifications render the alkyl polyalkylene oxides more costly.

WO 94/11330 describes an alkoxylate of 2-propyl heptanol and the use thereof as a surface-active component in detergent compositions for textile materials. Alkoxylates that comprise at least 50% by weight repeating units derived from C₃-C₄-alkylene oxides are not disclosed.

WO 94/11331 regards the use of an alkoxylate of 2-propyl heptanol in compositions for cleaning hard surfaces. Alkoxylates that comprise at least 50% by weight repeating units derived from C₃-C₄-alkylene oxides are not described.

EP-A-0 277 345 describes adducts of C₂-C₄-alkylene oxides such as ethylene oxide, propylene oxide and/or butylene oxide with polybutyl or polyisobutyl alcohols as carrier oils. The poly(iso)butenyl radical has a number average molecular weight above 300 Dalton.

WO 98/44022 describes adducts of alkylene oxides with alkanols or alkyl phenols. With regard to their use as carrier oils preference is given to the adducts with C₁₂-C₁₅ alkanols and phenols being substituted with C₄-C₁₅ alkyl groups.

WO 00/50543 suggests to overcome the compatibility problem by polyalkene alcohol polyalkoxylates wherein the polyalkene radical has number average molecular weight from 300 to 5000.

As can be seen from the above, it is a general accepted hypothesis for carrier oils based on polyoxyalkylene mono ethers, that these compounds require a hydrocarbon radical having at least 12 carbon atoms in order to achieve a good compatibility with modern detergent or dispersant additives. Unfortunately, the alcohols required as starting materials for these compounds are expensive. On the other hand, prior art expects polyoxyalkylene monoethers of short chain alcohols and polyethers of alkylene oxides to have poor application properties as carrier oils, i.e. they are expected to provide only insufficient support and promotion of the cleaning and keep-clean effect of modern detergent and dispersant dispersant additives.

It is therefore an object of the present invention to provide a compound which can be prepared from cheap starting materials and which does not suffer from compatibility problems. Moreover these compounds should provide performance properties comparable to the carrier oils of prior art, especially those based on polyoxyalkylene monoethers. In other words, these compounds should support and promote the detergents in their cleaning and keep-clean effect comparable to carrier oils of prior art. Moreover they should have a viscosity comparable to carrier oils based on polyoxyalkylene mono ethers of the more expensive polyoxyalkylene mono ethers of long chain alcohols. A very low viscosity of the carrier oil is particularly important in order to avoid the undesired effect of valve sticking. Valve sticking is understood as meaning the complete loss of compression on one or more cylinders of the internal combustion engine if, due to deposits, e.g. polymeric deposits, on the valve shaft, the spring forces are no longer sufficient for closing the valves properly.

The inventors of the present invention surprisingly found out that these objects are achieved by a polyether compound of the general formula I

R²-CHR¹-CH₂-O-A (I)

wherein
- R¹: is ethyl or propyl,
- R²: is linear or branched C₂-C₅-alkyl and
- A: is an oligo- or poly-(C₂-C₄-alkylene oxide) radical that comprises at least 50% by weight repeating units derived from C₃-C₄-alkylene oxides.

Therefore the invention relates to polyether compound of the general formula I.
The compounds of the formula I can be pure compounds or mixtures of different compounds of the formula I. The invention relates to both the pure compounds and to the mixtures thereof.

The compounds of the general formula I show a good compatibility with detergent additives and dispersant additives, especially with those additives having a polyisobutenyl radical. Therefore, compositions comprising detergent additives for fuel or lubricants and/or dispersant additives for fuel or lubricants. Moreover the compounds I support and promote the detergents in their cleaning and keep-clean effect comparable to polyoxyalkylene monoether based additives having a hydrocarbon radical of at least 12 carbon atoms.

Usually the compounds I are mixtures with regard to the radical A. In these mixtures compounds I vary with regard to the molecular weight of the radical A. The number average of the molecular weight Mₙ of the radical A usually ranges from 200 to 5000, preferably from 300 to 4000, more preferably from 400 to 3000 and especially from 500 to 2000 Dalton. The molecular weight distribution of the polyalkylene oxide radical A is preferably narrow, i.e. the ratio M_{w}/Mₙ of weight average molecular weight M_{w} to number average molecular weight Mₙ is below 1.5 and preferably ranges from 1.0 to 1.2. Consequently the molecular weight of the compounds I also varies. With regard to their properties compounds I are preferred, wherein the number average molecular weight is from 320 to 5200, preferably from 420 to 4200, more preferably from 520 to 3200 and especially from 620 to 2200 Dalton. The ratio M_{w}/Mₙ is preferably as given above for the radical A. The molecular weight and the polydispersities of the compounds I can be determined by gel permeation chromatography (GPC) according to methods well known in the art. The calibration is usually effected using commercially available polystyrene standards. The internal standard is usually toluene and the solvent (eluent) is usually tetrahydrofuran. In general GPC is performed on three columns with different pore sizes, e.g. SDV 100 Å, 10³ Å 10⁵ Å, all 8 × 300 mm, 5 mm. Optionally a precolumn may be used, e.g.: precolumn: PSS, SDV 8 × 50 mm, 5 mm. In general the detection will be effected by detection of the refracive index (RI detectors).

The radical A can be described by the general formula

-[Alk-O]ₚ-H (A)

wherein p is the number of the repeating units within the radical A and Alk is C₂-C₄-alkylene, such as 1,2-ethylene, 1,2-propylene, 1,2-butylene, cis or trans 2,3-butylene and 1-methyl-1,2-propandiyl. Alk may be the same or different in the repeating units of the radical A. In other words, the radicals A comprises both uniform oligomeric radicals, wherein in each repeating unit Alk are the same, and cooligomeric radicals, i.e. radicals, wherein Alk in different repeating units is different. The different repeating units are arranged within the radical A randomly.

The number average p of repeating alkylene oxide units (degree of alkoxylation) is preferably from 4 to 100, particularly preferably from 6 to 70, in particular from 8 to 50 and especially from 10 to 40.

With regard to their application properties as carrier oils, compounds I are preferred, wherein the radical A comprises at least 50% by weight, preferably at least 70% by weight and more preferred at leas 90% by weight of repeating units derived from C₃-C₄-alkylene oxides. In other words, the radical A comprises at least 50% by weight, preferably at least 70% by weight and more preferred at leas 90% by weight, based on the total weight of the radical A, of repeating units Alk-O, wherein Alk is C₃- or C₄-alkylene. More preferably the radical A contains only (i.e. at least 99% by weight) repeating units Alk-O, wherein Alk is selected from the group consisting of C₃-C₄-alkylene. In an especially preferred embodiment, the radical A comprises at least. 50% by weight of repeating units derived from propylene oxide, i.e. repeating units [CH₂-CH(CH₃)-O] and up to 50% by weight of repeating units selected from C₄-alkylenoxides, i.e. [CH₂-CH(CH₂CH₃)-O], [CH(CH₃)-CH(CH₃)-O] and [CH₂-C(CH₃)₂-O].

The polyether compounds I may comprise a specific radical R²-CHR¹-CH₂- or mixtures of different radicals R²-CHR¹-CH₂-. Preferably R²-CHR¹-CH₂- is uniform or a mixture of isomers. Preferably the radical R²-CHR¹-CH₂- is selected from the group consisting of 2-ethylhexan-1-yl, 2-propylheptan-1-yl, 2-propyl-4-methylhexan-1-yl, 2-proply-5-methylhexan-1-yl, and mixtures thereof. In a preferred embodiment the radical R²-CHR¹-CH₂- is 2-ethylhexan-1-yl. In another preferred embodiment, the radical R²-CHR¹-CH₂- is 2-propylheptan-1-yl or a mixture, comprising at least 50% by weight of 2-propylheptan-1-yl and up to 50% by weight of 2-propylmethylhexan-1-yl isomers such as 2-propyl-4-methylhexan-1-yl and 2-propyl-5-methylhexan-1-yl.

With regard to their application properties as carrier oils, compounds I are preferred, which have a viscosity at 40°C ranging from 20 to 400 mm²/sec, preferably from 30 to 300 mm²/sec and especially from 50 to 200 mm²/sec, determined according to DIN 51562 (ISO 3105).

The compounds I of the present invention can be prepared by any processes described in the art for the preparation on polyoxyalkylene monoalkyl ethers. It is economically advantageous to prepare the compounds I by reacting an alcohol of the formula II

R²-CHR¹-CH₂-OH (II)

wherein R¹ and R² have the aforementioned meanings, with at least one C₃-C₄-alkylene oxide or a mixture comprising ethylene oxide and at least 50% by weight of at least one C₃-C₄-alkylene oxide, in the presence of a catalyst.

Suitable C₂-C₄-alkylene oxides comprise ethylene oxide, 1,2-propylene oxide, 1,2-butylene oxide, cis- and trans 2,3-butylene oxide and 2-methyl-1,2-propylene oxide and mixtures thereof. The alkylene oxides are particularly preferably selected from 1,2-propene oxide, 1,2-butene oxide and mixtures thereof. The alkylene oxides can also be used in the form of mixtures which are obtainable by oxidation of industrially accessible olefin streams. These may additionally contain olefins not associated with the oxidation and/or inert substances (alkanes). It is well understood by a skilled person that the type and amount of alkylene oxide used in this process corresponds to composition and to the number average molecular weight of the obtained radical A. In other words, if the desired compound I should carry a radical A, which is a copolymer of different, randomly arranged repeating units Alk-O, mixtures of C₂-C₄-alkylene oxides are reacted.

As regards C₄-alkylene oxides, mixtures are preferred which are derived from industrially available olefin mixtures. Examples of such mixtures of C₄-alkylene oxides are the oxidation or epoxidation products of C₄-olefin-rich hydrocarbon streams. Preferred industrially available C₄-olefin mixtures result from hydrocarbon cleavage in mineral oil processing, for example by catalytic cracking, such as fluid catalytic cracking (FCC), thermocracking or hydrocracking. A preferred industrial olefin mixture is the C₄-cut.

C₄-Cuts are obtainable, for example, by fluid catalytic cracking of gas oil, steam cracking of ethane to gas oil and in particular steam cracking of naphtha or LPG (liquefied petroleum gas) for the preparation of ethene and propene. Depending on the composition of the C₄-cut, a distinction is made between the total C₄-cut, the so-called refined product I obtained after separating off 1,3-butadiene and the refined product II obtained after separating off isobutene. The HC₄-fraction, i.e. a total C₄-cut whose butadiene content was hydrogenated to give a mixture of 1-butene and cis- and trans-2-butene, is furthermore suitable. Depending on the quality of the fractionation, the C₄-cuts obtained may also still contain saturated and unsaturated hydrocarbons having less than or more than 4 carbon atoms, for example, propane, propene, pentanes, pentenes, hexanes, hexenes, etc. These olefin mixtures, too, can advantageously be used for the preparation of polyether compounds.

For example, a mixture of C₄-alkylene oxides which was obtained from refined product I and has the following composition is suitable for the novel process: about 3.4 mol% of isobutane; about 7.4 mol% of n-butane; about 19.9 mol% of 1 ,2-butene oxide; about 7.9 mol% of 2,3-trans-butene oxide; about 4.6 mol% of 2,3-cis-butene oxide and about 46.8 mol% of isobutene oxide.

Also suitable is a mixture of C₄-alkylene oxides which was obtained from refined product II and has the following composition: about 6.2 mol% of isobutane; about 13.3 mol% of n-butane; about 55.6 mol% of 1,2-butene oxide; about 14.6 mol% of 2,3-trans-butene oxide; about 8.5 mol% of 2,3-cis-butene oxide and about 1.8 mol% of isobutene oxide.

The reaction of the alcohol II with the C₂-C₄-alkylene oxide can be performed in analogy to known processes for alkoxylating alkanols. The reaction can be performed in the presence of a basic or an acidic catalyst.

Suitable basic catalysts comprise alkali metal and alkaline earth metal hydroxides, such as sodium hydroxide, potassium hydroxide and calcium hydroxide, alkali metal. aluminates, alkali metal alkoxides, e.g. the sodium and the potassium alkoxides of C₁-C₄-alkanols, such as sodium methoxide, sodium ethoxide and potassium t-butoxide, and also sodium hydride and calcium hydride and alkali metal carbonates, such as sodium carbonate or potassium carbonate. Preferred bases are the alkali metal hydroxides and alkali metal alkoxides. The base is generally used in an amount of from 0.05 to 10% by weight, preferably 0.5 to 2% by weight, based on the total amount of the starting materials.

The reaction temperature is usually at least 80°C and preferably ranges from 90 to 200°C, in particular from 100 to 160°C. The reaction can be carried out in the reactors customary for this purpose.

A skilled person will appreciate, that radicals A having a cooligomeric structure can be obtained by adding a mixture of different epoxides which will lead to a random distribution of the different moieties or by sequential addition of different epoxides, which will lead to a block-wise arrangement.

In a preferred embodiment of the invention compounds I are prepared in the presence of heterogeneous catalyst of the multimetal cyanide type. The multimetal cyanide catalysts in the novel process leads as a rule to a reduction in the reaction time and to higher conversions of alkylene oxides in the alkoxylation reaction. Moreover, the multimetal cyanide catalysts leads to alkoxylation products which have a molecular weight distribution which additionally advantageously influences the compatibility, the efficiency and in particular the viscosity properties for use as carrier oils and/or as detergents or dispersants in fuel and lubricant compositions.

Multimetal cyanide catalysts which are suitable for the preparation of the novel alkanol polyalkoxylate compounds are known, for example from US 4,472,560, EP-A-0 654 302, EP-A-0 700 949, EP A 0 743 093, EP-A-0 755 716, EP-A-0 862 947, WO 97/40086, WO 98/16310, WO 99/16775, WO 00/14045, WO 00/74843 and WO 00/74845.

For example, multimetal cyanide catalysts comprising a multimetal cyanide complex compound of the formula III are suitable for the purposes of the invention:

M¹ ₐ[M²(CN)_{b}(A)_{c}]_{d} ^{·} fM¹ _{g}Xₙ ^{·} h(H₂0) ^{·} eL (III)

where
- M¹: is at least one metal ion selected from the group consisting of Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr^{2l+}, Cr³⁺ and Cd²⁺,
- M²: is at least one metal ion selected from the group consisting of Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺ and Ir³⁺,
- M¹ and M²: being identical or different,
- A: is an anion selected from the group consisting of halide, hydroxide, sulfate, carbonate, cyanide, thiocyanate, isocyanate, cyanate, carboxylate, oxalate and nitrate,
- X: is an anion selected from the group consisting of halide, hydroxide, sulfate, carbonate, cyanide, thiocyanate, isocyanate, cyanate, carboxylate, oxalate and nitrate
and
- L: is a water-miscible ligand selected from the group consisting of alcohols, aldehydes, ketones, ethers, polyethers, esters, ureas, amides, nitriles and sulfides,
- a, b, c, d, g and n: being selected so that the electroneutrality of the compound is ensured,
- e: is the coordination number of the ligand,
- f: is a fraction or integer greater than 0 or 0 and
- h: is a fraction or integer greater than 0 or 0.

Preferred multimetal cyanide catalysts of the formula III are those which have one or more of the following features:
- M¹ is Zn²⁺, Fe²⁺, Co²⁺ or Ni²⁺, especially Zn²⁺
- M² is Co²⁺, CO³⁺, Fe²⁺, Fe³⁺, Cr³⁺, Rh³⁺, Ni²⁺, especially Co³⁺ and/or Fe³⁺
- A is CN⁻
- L is a C₁-C₄-alcanol, especially tert-butanol
- h or e may be 0.

Preferably, the multimetal cyanide complex compounds of the formula III are applied to solid, inert unfoamed supports or introduced into these and molded to give moldings.

Processes for the preparation of catalysts containing multimetal cyanide complex compounds of the formula III are known to a person skilled in the art, for example from the above cited references. Amongst catalysts of the multimetal cyanide type those are preferred which are described in EP-A 826 947 and WO 00/14045, the content of which is hereby fully incorporated by reference. The lamellar multimetal cyanide catalysts described therein are preferably crystalline and may have a cubic, tetragonal, trigonal, orthorhombic, hexagonal, monoclinic or triclinic crystal system.

The multimetal cyanide catalysts are preferably used in an amount of from 0.001 to 5, particularly preferably from 0.1 to 2, in particular from 0.3 to 1, % by weight, based on the amount of all alkylene oxides used.

Typical reaction temperatures for the reaction of the alcohols II with alkylene oxides are from 70 to 200°C, preferably from 80 to 180°C, particularly preferably from 90 to 150°C. The pressure is usually from 0.1 to 30, preferably from 0.2 to 20, in particular from 0.5 to 15, bar. Usually, the reaction is carried out with substantial exclusion of oxygen, for example under inert gases, such as nitrogen or argon.

The reaction of the alcohols with alkylene oxides can be effected in a continuous process or in a batch or semibatch process. Batch and semibatch processes are preferred because they are easier to carry out and the apparatus is less expensive.

In many cases, it is advantageous to carry out the reaction of the alcohols with alkylene oxides in a semibatch process. In the context of this invention, semibatch process is to be understood as meaning a process in which only a portion of the alkylene oxides to be reacted, as a rule less than 50, preferably less than 30, in particular less than 15, % by weight is combined directly with catalyst and initiator (i.e. alcohol) at the beginning of the reaction and the remaining portion is added over a period. The period of the addition is as a rule at least one sixth, preferably at least one fifth, particularly preferably at least one third, of the total reaction time. The total reaction time is as a rule from about 10 minutes to 10 hours, for example from 30 minutes to 7 hours, depending on the reaction temperature.

The reaction product can be worked up in a conventional manner by expelling volatile components in gaseous form under reduced pressure and, if required, by filtration.

Suitable processes for workup are e.g. disclosed in DE 199 57 105, and the prior art cited therein, and WO 02/42356.

The novel polyether compounds of the formula I are very useful as carrier oils for detergents and dispersants in fuel and lubricant compositions. They are in particular useful in gasoline fuel compositions with direct injection performance. The present invention therefore also relates to the use of polyether compounds I as carrier oils for detergents and dispersants in fuel and lubricant compositions. The present invention also relates to a composition which is useful as an additive concentrate compositon for fuel or lubricants and which comprises at least one polyether compound as defined above and a detergent and/or dispersant additive for fuel or lubricants.

The present invention also provides a fuel composition comprising a majority of a hydrocarbon fuel and at least one polyether compound according to the invention, defined as above, and also optionally at least one further additive. The invention further provides a lubricant composition comprising a majority of a lubricant and at least one polyether compound, as defined above, and also optionally at least one further additive. In the context of the present invention the term "fuel" encompasses all commercial gasoline and diesel fuels. The fuel and lubricant compositions according to the invention preferably contain at least one polyether compound, as defined above, in an amount of from 1 to 5000 ppm, more preferably 5 to 1000 ppm. The present invention also provides an additive concentrate comprising at least one polyether compound according to the invention and at least one diluent, and also optionally at least one further additive. The polyether compounds are present in the additive concentrate preferably in an amount from 0.1 to 80% by weight, more preferably from 10 to 75% by weight and in particular from 30 to 70% by weight, based on the weight of the concentrate. Suitable diluents are, for example, aliphatic and aromatic hydrocarbons, such as Solvent Naphtha. If the additive concentrates according to the invention are to be used in low-sulfur diesel or gasoline fuels, preference is given to low-sulfur hydrocarbons as diluents in the additive concentrate. In addition to the polyether compound itself, the fuel and lubricant compositions, and also the additive concentrates, according to the invention optionally contain further customary fuel and lubricant additives, preferably the additives described below.

The compounds I of the present invention surprisingly have a good compatibility with detergents and dispersants carrying an polybutene or polyisobutene radical, especially a polyisobutene radical, in particular a polyisobutene radical having number average molecular weight from 500 to 20000 dalton. Therefore, a preferred embodiment of the invention relates to compositions which comrise a compound of the general formula I and a nitrogen containing detergent/dispersant additive that carries a polybutenyl radical, in particular a polyisobutenyl radical.

Examples of conventional detergents and/or dispersants which are known from the prior art are polybutenamines and especially polyisobutenamines, polyisobutenesuccinic acid derivatives, and polyisobutene Mannich bases, in particular:
(a) poly(iso)butenamines which are obtainable by hydroformylation of highly reactive polyisobutene and subsequent reductive amination with ammonia, monoamines or polyamines, such as dimethyleneaminopropylamine, ethylenediamine, diethylenetriamine, triethylenetetramine or tetraethylenepentamine, for example those described in EP-A 244 616,
(b) poly(iso)butenamines which are obtainable by chlorination of polybutenes or polyisobutenes and subsequent amination with ammonia, monoamines or the abovementioned polyamines,
(c) poly(iso)butenamines which are obtainable by oxidation of double bonds in poly(iso)butenes with air or ozone to give carbonyl or carboxy compounds and subsequent amination under reducing (hydrogenating) conditions,
(d) poly(iso)butenamines which are obtainable from polyisobutene epoxides by reaction with amines and subsequent dehydration and reduction of the amino alcohols, for example those described in DE A 196 20 262,
(e) poly(iso)butenamines which may contain hydroxyl groups and are obtainable by reaction of highly reactive polyisobutenes with oxides of nitrogen or mixtures of oxides of nitrogen and oxygen and subsequent hydrogenation of these reaction products, for example those described in WO A 97/03946,
(f) hydroxyl-containing poly(iso)butenamines which are obtainable by reaction of polyisobutene epoxides with ammonia, monoamines or the abovementioned polyamines, for example those described in EP A 476 485,
(g) poly(iso)butene succinic derivatives, which are obtainable by reaction of poly(iso)butene succinic anhydrides with ammonia, primary amines or polyaminoamines, e.g. as disclosed in DE27 02 604, EP 602 863 and WO 03/051932.
(h) poly(iso)butene Mannich bases which are obtainable by reaction of poly(iso)butene-substituted phenols or kresols with aldehydes and monoamines or the abovementioned polyamines, for example those described in EP-A 831 141.

Conventional dispersants are, for example, imides, amides, esters and ammonium and alkali metal salts of the aforementioned polyisobutenesuccinic anhydrides, which are used in particular in lubricating oils, but in some cases also as detergents in fuel compositions.

Further gasoline fuel additives which may be used are those which inhibit valve seat wear in combination with the novel polyether compounds; for example, additives containing carboxyl groups or the alkali metal or alkaline earth metal salts thereof, for example copolymers of C₂-C₄₀-olefins with maleic anhydride, having a molar mass (number average) of from 500 to 20000, some or all of the carboxyl groups of which have been converted into the alkali metal or alkaline earth metal salts and the remainder of the carboxyl groups have been reacted with alcohols or amines, as described in EP-A 307 815, or additives containing sulfo groups or the alkali metal or alkaline earth metal salts thereof, for example alkali metal or alkaline earth metal salts of alkyl sulfosuccinates, as described in EP-A 639 632, are of interest here. Such gasoline fuel additives which inhibit valve seat wear can also advantageously be used in combination with conventional fuel detergents, such as poly(iso)butenamines, the hydrogenation products thereof or polyetheramines, as described in WO-A 87/01126.

The compositions according to the invention contain the novel polyether compounds I in general in amounts of from 1 to 80%, in particular from 2 to 60% and in particular from 5 to 50% by weight, based on the total amount of active agents in the composition. The amount of detergent and/or dispersant additive will in general be at least 10% by weight of the composition, in general from 10 to 99% by weight, preferably from 10 to 70% by weight and especially from 10 to 50% by weight, based on the total weight of the active agents in the composition (i.e. without additional solvents).

The compositions of the invention may also contain further components and assistants customary for this purpose and solvents and diluents, for example aliphatic and aromatic hydrocarbons, such as solvent naphtha.

Further conventional components and assistants are corrosion inhibitors, for example based on ammonium salts of organic carboxylic acids, which salts tend to form films, or on heterocyclic aromatics in the case of corrosion protection of nonferrous metals, antioxidants or stabilizers, for example based on amines, such as p-phenylenediamine, dicyclohexylamine or derivatives thereof and on phenols, such as 2,4-di-tert-butylphenol or 3,5-di-tert-butyl-4-hydroxyphenylpropionic acid, demulsifiers, antistatic agents, lubricity additives, such as certain fatty acids, alkenylsuccinic esters, bis(hydroxyalkyl)-fatty amines, hydroxyacetamides and castor oil, and markers. Sometimes amines are also added for increasing the pH of the fuel.

Further suitable components and additives are conventional carrier oils, for example mineral carrier oils (base oils), in particular those of viscosity class Solvent Neutral (SN) 500 to 2000, and synthetic carrier oils based on olefin polymers with M_{N} = 400 to 1800, especially those based on polybutene or on polyisobutene (hydrogenated or nonhydrogenated), and those based on poly-alpha-olefins or poly-internal-olefins.

The compositions of the present invention are useful as fuel additives, especially for gasoline fuels. The compositions of the invention are added to a conventional fuel in effective amounts, which are to be understood as a rule as meaning from 10 to 10000, preferably from 30 to 5000, in particular from 50 to 2000, ppm by weight (= mg/kg fuel).

The compositions of the present invention are also useful as additives for lubricant compositions. The compositions of the present are usually added to a conventional lubricant in amounts from 0.1 to 10% by weight, in particular from 0.5 to 5% by weight, based in each case on the total amount of the lubricant and the composition.

The novel polyether compounds I are capable of effectively avoiding the undesired sticking of valves, in particular in gasoline engines. They are as a rule furthermore sufficiently compatible with the other additives so that no separation effects occur. Moreover, the viscosity behavior causes no formulation problems.

The polyether compounds I can be used primarily as carrier oils are likewise effective as detergents. Even in low doses, they therefore make a considerable contribution to the overall performance of an additive package or of a fuel or lubricant composition with respect to the detergent effect and therefore permit at least a partial saving of the conventional expensive detergents. The amino-terminated polyether compounds which can be used primarily as detergents and/or dispersants have good compatibility with carrier oils, in particular with the abovementioned ones, good efficiency, in particular with respect to the prevention and elimination of deposits in internal combustion engines, and furthermore advantageous viscosity behavior.

### Working Examples

The following examples are incorporated for illustration purposes.

The molecular weight and the polydispersities of the compounds I were determined by gel permeation chromatography (GPC). The calibration was effected using polystyrene. The internal standard was toluene and the solvent was tetrahydrofuran. The flow rate was 1 ml/min. The following columns were used: precolumn: PSS, SDV 8 × 50 mm, 5 mm; separation columns: SDV 100 Å, 10³ Å, 10⁵ Å, all 8 × 300 mm, 5 mm. The detection was effected by means of RI detectors.

Viscosity was determined according to DIN 51562 (ISO 3105).

### Example 1

In a 3.5 I steel autoclave 158 g of propyl heptanol (technical grade mixture with a 2-propylheptan-1-ol content > 90%) and 2.9 g of solid potassium tert.-butylate were mixed and dehydrated at 90°C and < 5 mbar for 1 hour. The mixture was heated to 130°C, and 1276 g of propylene oxide were then added to the mixture. After completion of the addition, the mixture was stirred for 2 hours and was then stripped with nitrogen. In order to remove the catalyst, Ambosol 500 (magnesium silicates, Clariant, France) and Hyflo Supercel (diatomaceous earth, Lehmann and Voss & Co.) were admixed to the product at 90°C, then stirred for at least 1 hour and then filtered. Thus, 1430 g of a clear oil were obtained. (D = 1.1, kinematic viscosity at 40°C : 92 mm²/s).

### Example 2

Analogously to example 1, 158 g of propyl heptanol (see example 1) and 1584 g of butylene oxide were reacted and worked up. However, in contrast to example 1 the reaction was carried out at 140°C. After working up, 1739 g of a clear oil were obtained. (kinematic viscosity at 40°C : 115 mm²/s).

### Example 3

a) Preparation of catalyst: In a 800 I stirring vessel provided with a turbine agitator with inclined blades, submerged tube, pH electrode, conductivity cell and scattered light detector 353.9 kg of aqueous hexacyano cobalt acid (cobalt content: 9 g/l cobalt) were heated to 50°C while stirring. While stirring (stir capacity 1 W/I), then 215.7 kg of an aqueous zinc acetate dihydrate solution (zinc content: 2.5% by weight) which also was heated to 50°C were added over 45 min. After the completion of the addition the stir capacity was fixed at 0.4 W/I and a solution of 7.67 kg Pluronic® PE 6200 (BASF AG) in 10 kg of water was added thereto. The reaction mixture was heated to 60°C and stirred for another 2 hours at this temperature. Then 70.5 kg of aqueous zinc acetate dihydrate solution (zinc content: 2.5% by weight) were admixed while stirring (stir capacity: 0.4 W/I) at 60°C over 20 min. After a few minutes, the conductance started to decline. Therefore, the reaction mixture was thereafter stirred with a stir capacity of 1.5 W/I. The suspension was stirred at 60°C and with a stir capacity of 1.5 W/I until the pH value had fallen from 4.15 to a constant value of 3.09. Then the precipitated suspension was filtered off by means of a filter press and was washed in the filter press with 400 I of water. The watery wet filter cake was dried under vacuum at 50°C.
b) Polymerization: In an ultrasonic bath 163.4 g of 2-propylheptanol (see example 1) were disperged with 29.6 mg of DMC, obtained according to step a). The dispersion was dehydrated for 2 hours in a 2.5 I steel autoclave at 100°C and 20 mbar and thereafter was made inert by means of nitrogen. Then the dispersion was heated to 135°C and 20 g of propylene oxide were added thereto. Starting of the reaction could be observed after about two minutes due to the rising of the inner temperature and the decrease in pressure, whereupon further 1000 g of propylene oxide were added. After completion of the addition, the mixture was further stirred for 30 min at 135°C. Thus, 1177 g of a clear oil were obtained (D=1.1, kinematic viscosity at 40°C : 62 mm²/s)

### Example 4

Analogously to example 3, 163.4 g of 2-propylheptanol (see example 1) and 1200 g of propylene oxide were reacted and worked up. Thus, 1338 g of a clear oil were obtained (D=1.1, kinematic viscosity at 40°C: 73 mm²/s).

### Comparative example 1

Analogously to example 3, 608.5 g of isotridecanol (Tridecanol N, BASF) and 3000 g of propylene oxide were reacted and worked up. Thus, 3549 g of a clear oil were obtained (D=1.1, kinematic viscosity at 40°C: 65 mm²/s).

### Comparative example 2

Analogously to example 3,517.2 g of isotridecanol (Tridecanol N, BASF) and 3000 g of propylene oxide were reacted and worked up. Thus, 3503 g of a clear oil were obtained (D=1.1, kinematic viscosity at 40°C: 87 mm²/s).

### Example 5

Analogously to example 3,105.4 g of 2-ethylhexanol and 800 g of propylene oxide were reacted and worked up. Thus, 894 g of a clear oil were obtained (D=1.1, kinematic viscosity at 40°C: 56 mm²/s).

### Example 6

Analogously to example 3, 87.4 g of 2-ethylhexanol and 780 g of propylene oxide were reacted and worked up. Thus, 875 g of a clear oil were obtained (D=1.1, kinematic viscosity at 40°C: 70 mm²/s).

### Formulation as additive concentrates (examples 7 to 10, comparative examples 3 to 5)

The polyether compounds obtained according to examples 3, 4, 5 and 6, the polyether compounds of comparative examples 1 and 2 and polypropylene glycol (M_{w} 900) respectively were employed to formulate additives of the following composition: 17% polyether compound, 61 % polyisobutenamine (M_{w} 1000) and 22% Xylene. The additives were stored in sealed glass flasks for 5 days at a temperature of 35°C, 0°C and -20°C respectively and afterwards judged visually. The results are shown in table 1.

**Table 1**

| Example no. | polyether from example | 35 °C 2 d | 35 °C 5 d | 0 °C 2 d | 0 °C 5 d | -20 °C 2 d | -20 °C 5 d |
|---|---|---|---|---|---|---|---|
| 7 | 5 | clear solution | clear solution | clear solution | clear solution | clear solution | clear solution |
| 8 | 6 | clear solution | clear solution | clear solution | clear solution | lightly cloudy | lightly cloudy |
| 9 | 3 | clear solution | clear solution | clear solution | clear solution | clear solution | clear solution |
| 10 | 4 | clear solution | clear solution | clear solution | clear solution | clear solution | clear solution |
| C3 comparative | comp. 1 | clear solution | clear solution | clear solution | clear solution | clear solution | clear solution |
| C4 comparative | comp.2 | clear solution | clear solution | clear solution | clear solution | clear solution | clear solution |
| C5 comparative | polypropylene glycol (M_{w} 900) | cloudy | cloudy | cloudy | Cloudy | phase separation | phase separation |

The additives according to the invention are stable in storage even at low temperatures. Only example 8 showed a light cloudyness after 2 days at -20°C. The additive C5 on the basis of propylene glycol was cloudy immediately after the preparation.

### Testing of performance characteristics (test examples T1 - T8)

Tests on the cleanliness of the intake valves were carried out in a M 111 engine according to CEC method F-20-A-98. For this purpose, a commercial European premium grade base fuel according to EN 228, which contained no additive, was initially used (example T1). At the end of the test, altogether 325 mg of deposits were measured over all intake valves. The test procedure was then repeated with the same engine and the same base fuel according to EN 228, to which in each following run 350 mg/kg of the polyether additives obtained from examples 9, 10, C3 and C4 were used (= examples T2 - T5). After a second run with no additive (example T6) to calibrate the engine, altogether 292 mg of deposits were measured over all intake valves. The test procedure was then again repeated with the same engine and the same base fuel according to EN 228, to which in each of the two following runs (examples T7 and T8) 350 mg/kg of the polyether additives obtained from example 7 and comparative example C5 were used. The results are shown in table 2.

**Table 2**

| Example no. | additive no. | Dosage [mg/kg] | IVD [mg/Ventil] | Δ IVD [mg/Zylinder] |
|---|---|---|---|---|
| T1 base run | -- | 0 | 387,374,259,263, 231, 222, 414, 453 | 325 |
| T2 | 9 | 350 | 1, 0, 7, 7, 7, 30, 7, 27 | 11 |
| T3 | 10 | 350 | 3, 1, 22, 7, 7, 28, 2, 1 | 9 |
| T4 comparative | C3 | 350 | 1, 0,1, 0, 9, 53, 0, 5 | 9 |
| T5 comparative | C4 | 350 | 1, 0, 22, 3, 8, 31, 3, 1 | 9 |
| T6 base run | -- | 0 | 464, 431, 190, 220, 213, 204, 366, 246 | 292 |
| T7 | 7 | 350 | 4, 0, 50, 50, 30, 49, 9, 32 | 28 |
| T8 comparative | C5 | 350 | 0,0,35,43,77,37, 18,41 | 31 |
| IVD: intake valve deposits | | | | |

As can be seen from the above, the polyether compounds of the invention provide performance properties comparable to carrier oils of the prior art, based on polyoxyalkylene monoethers of isotridecanol, i.e. with a long chain hydrocarbon radical. In other words, the compounds of the invention, based on cheap alcohols as starting materials, support and promote fuel detergents in their cleaning and keep-clean effect comparable to those of carrier oils of the prior art.

## Claims

1. A polyether compound of the general formula I
R²-CHR¹-CH₂-O-A (I)
wherein
R¹ is ethyl or propyl,
R² is linear or branched C₂-C₅-alkyl and
A is an oligo- or poly-(C₂-C₄-alkylene oxide) radical that comprises at least 50% by weight repeating units derived from C₃-C₄-alkylene oxides.

2. A polyether compound as claimed in claim 1, having a number average molecular weight of from 300 to 5000 Dalton.

3. A polyether compound as claimed in any of the preceding claims, where the oligo- or poly-(C₂-C₄-alkylene oxide) radical comprises at least 50 % by weight of repeating units derived from propylene oxide.

4. A polyether compound as claimed in any of the preceding claims, where the radical R²-CHR¹-CH₂- is selected from the group consisting of 2-ethylhexan-1-yl, 2-propylheptan-1-yl, 2-propyl-4-methylhexan-1-yl, 2-proply-5-methylhexan-1-yl, and mixtures thereof.

5. A polyether compound as claimed in any of the preceding claims, which is obtained by reacting an alcohol of the formula II
R²-CHR¹-CH₂-OH (II)
wherein R¹ and R² have the meanings given in claim 1, with at least one C₃-C₄-alkylene oxide or a mixture comprising ethylene oxide and at least 50% by weight of at least one C₃-C₄-alkylene oxide, in the presence of a catalyst.

6. A polyether compound as claimed in claim 5, wherein the catalyst is a heterogeneous catalyst of the multimetal cyanide type.

7. A polyether compound as claimed in either claim 5 or 6, wherein the C₃-C₄-alkylene oxide comprises at least 50 % by weight propylene oxide.

8. A method for preparing a polyether compound as defined in any of the preceding claims, which comprises reacting an alcohol of the formula II
R²-CHR¹-CH₂-OH (II)
wherein R¹ and R² have the meanings given in claim 1, with at least one C₃-C₄-alkylene oxide or a mixture comprising ethylene oxide and at least 50% by weight of at least one C₃-C₄-alkylene oxide in the presence of a catalyst.

9. The use of a polyether compound as defined in any of claims 1 to 7 as an additive in fuel or lubricant compositions.

10. A composition, comprising at least one polyether compound, as defined in any of claims 1 to 7, and a nitrogen containing detergent and/or dispersant additive for fuels or lubricants.

11. A composition as claimed in claim 10, comprising the at least one polyether compound in an amount from 1 to 50% by weight, based on the composition.

12. A composition as claimed in either claim 10 or 11, where the detergent and/or dispersant additive carries a polyisobutenyl radical.

13. A composition as claimed in claim 12, where the detergent and/or dispersant additive is selected from the group consisting of polyisobutenamines, polyisobutenesuccinic acid derivatives, and polyisobutene Mannich bases.

14. A composition as claimed in any of claims 10 to 13, comprising the detergent and/or dispersant additive in an amount of from 10 to 99% by weight, based on the composition.

15. A fuel composition, comprising a majority of a hydrocarbon fuel and at least one polyether compound as defined in any one of claims 1 to 7 and also optionally at least one further additive.

16. A lubricant composition, comprising a majority of a lubricant and at least one polyether compound as defined in any one of claims 1 to 7 and also optionally at least one further additive.

17. An additive concentrate, comprising at least one polyether compound as defined in any one of claims 1 to 7 and at least one diluent and optionally at least one further additive.
